# EUROPÄISCHE PATENTSCHRIFT

(11) **EP 4 194 159 B1**
(45) Veröffentlichungstag und Bekanntmachung des Hinweises auf die Patenterteilung: **02.10.2024**
(21) Anmeldenummer: 21213654.3
(22) Anmeldetag: 10.12.2021
(51) Int. Cl.: B25J 15/02

(54) **AUTOMATISCHER GREIFER, INSBESONDERE ROBOTERGREIFER**
AUTOMATIC GRIPPER, IN PARTICULAR ROBOTIC GRIPPER
PINCE AUTOMATIQUE, EN PARTICULIER PINCE ROBOTIQUE

(43) Veröffentlichungstag der Anmeldung: 14.06.2023
(73) Patentinhaber: Asutec GmbH, 72622 Nürtingen (DE)
(72) Erfinder: Unterhuber, Andreas, 73257 Köngen (DE)
(74) Vertreter: Ostertag & Partner Patentanwälte mbB

(56) Entgegenhaltungen:
- EP-A1- 2 390 067
- DE-A1- 102008 057 386
- DE-A1- 102019 108 767
- JP-B2- 6 277 119

## Beschreibung

### ANWENDUNGSGEBIET UND STAND DER TECHNIK

Die Erfindung betrifft ein Greifmodul zum Zwecke des Greifens und Bewegens von Greifobjekten, insbesondere als Greifmodul eines Roboters oder eines Handhabungsautomaten.

Ein gattungsgemäßes und erfindungsgemäßes Greifmodul weist mindestens zwei Wirkelemente auf, die mittels eines Antriebssystems relativ zueinander verlagerbar sind und Greifflächen zum Ergreifen des Greifobjektes aufweisen. Mindestens eines der Wirkelemente ist verlagerbar ausgestaltet, so dass es gegenüber dem anderen Wirkelement verlagert werden kann, um von außen oder innen das Greifobjekt zu erfassen, insbesondere um dieses anschließend transportieren zu können. Bekannte Greifmodule weisen üblicherweise einen Elektromotor als Teil des Antriebssystems auf. Dieser ist derart ausgelegt, dass er nach einem Verfahren der Wirkelemente bis in eine Kontaktstellung eine ausreichende Greifkraft auf das Greifobjekt ausüben kann, damit das Greifmodul nachfolgend das Greifobjekt sicher transportieren kann.

Ein hierfür ausreichend starker Elektromotor ist jedoch vergleichsweise groß, so dass die Nutzung in kleinen Greifmodulen schwierig ist. Zudem geht von einem solchen Elektromotor eine Gefahr aus, wenn das Greifmodul, insbesondere als Teil eines Roboters, in unmittelbarer Nähe zu Menschen arbeitet.

Das Dokument DE 10 2019 108767 A1 zeigt ein gattungsgemäßes Greifmodul.

### AUFGABE UND LÖSUNG

Aufgabe der Erfindung ist es, ein Greifmodul zur Verfügung zu stellen, welches die oben genannten Probleme des Standes der Technik zumindest teilweise überwindet.

Erfindungsgemäß wird hierfür ein Greifmodul vorgeschlagen, das in gattungsüblicher Weise über einen Modulträger sowie über mindestens zwei Wirkelemente verfügt. Mindestens eines der Wirkelemente, vorzugsweise jedoch beide Wirkelemente, sind gegenüber dem Modulträger mittels des Antriebssystems automatisiert verlagerbar.

Dabei sind in Hinblick auf die Verlagerbarkeit der Wirkelemente verschiedene Bauweisen von Greifmodulen möglich, so insbesondere solche mit linear gegeneinander verlagerbaren Wirkelementen, die vorzugsweise auf einer gemeinsamen Wellenführung geführt sind, als auch solche mit schwenkbeweglich gegeneinander verlagerbaren Wirkelementen.

Die einstückigen oder mehrstückigen Wirkelemente verfügen über Greifflächen, wobei je nach Arten des Greifens von innen oder von außen die Greifflächen innenseitig und aufeinander zu weisend oder außenseitig und voneinander weg weisend an den Wirkelementen vorgesehen sind. Vorzugsweise sind beidseitig an den Wirkelementen Greifflächen vorgesehen, um die Wirkelemente sowohl innengreifend als auch als außengreifend verwenden zu können.

Mindestens eines der Wirkelemente ist mittels eines Antriebssystems gegenüber dem Modulträger verlagerbar um die Wirkelemente des als Außengreifer agierenden Greifmoduls aufeinander zu zu bewegen bzw. um die Wirkelemente des als Innengreifer agierenden Greifmoduls voneinander weg nach außen zu bewegen. Wenngleich es grundsätzlich ausreicht, dass nur eines der Wirkelemente hierfür gegenüber dem Modulträger verlagerbar ist, sind vorzugsweise mindestens zwei Wirkelemente mittels des Antriebssystems gegenüber dem Modulträger verlagerbar. Bei einem Greifmodul mit mehr als zwei Wirkelementen sind vorzugsweise alle Wirkelemente mittels des Antriebssystems gemeinsam aufeinander zu oder voneinander weg verlagerbar.

Das Antriebssystem verfügt über zwei unterschiedliche Mechanismen zur Kraftbeaufschlagung der Wirkelemente, nämlich einen Elektromotor, dessen Aufgabe es primär ist, die Wirkelemente gegeneinander zu bewegen und insbesondere in Anlage mit einem Greifobjekt zu bringen, sowie einen auf ein Aktorelement wirkenden Elektromagneten, dessen primäre Aufgabe es ist, durch Aktivierung oder Deaktivierung bei am Greifobjekt anliegenden Wirkelementen eine Greifkraft auf das Greifobjekt auszuüben.

Der Elektromotor kann beispielsweise als bürstenloser Gleichstrommotor ausgebildet sein, aber auch andere Arten von Elektromotoren können hier Verwendung finden. Vorzugsweise handelt es sich bei dem Elektromotor um einen eher leistungsarmen Motor, da ein solcher Motor klein ist und somit die Integration in ein kleines Greifmodul gestattet. Da der Elektromotor vorzugsweise allein der Zustellung der Wirkelemente dient, nicht aber der Aufbringung der Greifkraft, ist ein Elektromotor mit geringer Maximalleistung üblicherweise ausreichend, die zu einer maximalen Kraft zwischen den Wirkelementen von weniger als 50 Newton führt, insbesondere von weniger als 30 Newton. Eine solch geringe Kraft bietet den Vorteil, dass keinerlei Gefahr schwerer Verletzungen gegeben ist, die von dem Elektromotor verursacht wird.

Die eigentliche Greifkraft wird vorzugsweise durch den Elektromagneten oder die ihm zugeordnete Feder verursacht. Wenngleich die hierdurch erzeugte Kraft je nach Auslegung des Elektromagneten und/oder der Feder recht hoch sein kann, ist auch hier die Gefahr schwerer Verletzungen gering, da vorzugsweise die mittels Aktivierung/Deaktivierung des Elektromagneten verursachte Verlagerung der Wirkelemente aufeinander zu oder voneinander weg gering ist, insbesondere weniger als 2 mm, vorzugsweise weniger als 1 mm.

Der Elektromagnet kann unmittelbar zur Kraftbeaufschlagung der Wirkelemente genutzt werden, indem er bei Aktivierung eine Kraft auf das Aktorelement ausübt, die derart weitergegeben wird, dass sie die Wirkelemente in Greifrichtung kraftbeaufschlagt. Vorzugsweise ist es jedoch die Kraft einer Federeinrichtung, die diese Kraftbeaufschlagung bei Deaktivierung des Elektromagneten ausübt. Kommt es bei gegriffenem Greifobjekt zu einem Stromausfall, so ist dies für die Aufrechterhaltung der Greifkraft nicht von Belang.

Insbesondere wird vorgeschlagen, dass dem Elektromagneten eine Federeinrichtung derart zugeordnet ist, dass die Federeinrichtung durch Aktivierung des Elektromagneten gespannt werden kann. Wird der Elektromagnet deaktiviert, also die Bestromung beendet oder reduziert, so reduziert dies die Spannung in der Federeinrichtung. Ist die Federeinrichtung als Druckfeder ausgestaltet, so geht diese Entspannung mit einer Verlängerung der Federeinrichtung einher. Dies kann insbesondere bei einer am Aktorelement anliegenden Federeinrichtung das Aktorelement vom Elektromagneten weg drücken und hierdurch die Kraftbeaufschlagung der Wirkelemente in Greifrichtung verursachen. Die Federeinrichtung wird vorzugsweise durch eine oder mehrere Schraubenfedern gebildet.

Eine bevorzugte Bauweise des Antriebssystems sieht vor, dass das Antriebssystem über eine Antriebsspindel verfügt, die gegenüber dem Modulträger rotativ und axial beweglich ist. Auf der Antriebsspindel ist eine translativ verlagerbare Spindelmutter geführt. Vorzugsweise ist die Spindelmutter derart durch den Modulträger oder hierzu ortsfeste Bauteile geführt, dass sie sich lediglich translativ bewegen lässt, nicht aber gegenüber dem Modulträger drehen lässt.

Die Spindelmutter ist mit dem mindestens einen Wirkelement und vorzugsweise mit mindestens zwei Wirkelementen kinematisch gekoppelt, so dass die in Erstreckungsrichtung der Spindel stattfindende Bewegung der Spindelmutter eine Kraft auf die Wirkelemente ausübt.

Die Verlagerung der Spindelmutter relativ zum Modulträger kann auf zwei Weisen erfolgen, nämlich erstens durch ein Drehen der Antriebsspindel und die hierdurch bewirkte Verlagerung der Spindelmutter und zweitens durch die gemeinsame axiale Verlagerung der Antriebsspindel und der Spindelmutter. In beiden Fällen kommt es zu einer Verlagerung der Spindelmutter.

Vorzugsweise ist der Elektromotor über seine Ausgangswelle mit der Antriebsspindel gekoppelt, um diese zu drehen. Der Elektromotor kann zu diesem Zweck als Getriebemotor ausgebildet sein, dessen Getriebe eine Untersetzung oder Übersetzung zwischen einer Rotorwelle des Elektromotors und dessen Ausgangswelle vorsieht. Bevorzugt ist es allerdings, wenn die Antriebsspindel unmittelbar durch die Rotorwelle des Elektromotors momentenbeaufschlagt wird, also ohne zwischengeschaltetes Getriebe. Hierdurch kann eine besonders kompakte Bauform erreicht werden.

Die axiale Bewegung der Antriebsspindel erfolgt vorzugsweise über den Elektromagneten, insbesondere indem der Elektromagnet bei Bestromung die Antriebsspindel gemeinsam mit dem Aktorelement in eine Richtung zieht und bei Wegfall der Bestromung das Aktorelement durch die schon beschriebene Federeinrichtung in entgegengesetzte Kraft gedrückt wird.

Eine bevorzugte Bauweise sieht vor, dass der Elektromotor und das Aktorelement einander gegenüberliegend beidseitig der Antriebsspindel vorgesehen sind.

Damit die Antriebsspindel gegenüber dem Modulträger in axialer Richtung beweglich ist, kann sie axial fest mit dem Elektromotor verbunden sein und der Elektromotor kann seinerseits ebenfalls axial beweglich gegenüber dem Modulträger sein. Bei einer solchen Gestaltung kann der Elektromagnetfest am Aktorelement des Elektromagneten befestigt sein und mittels des Elektromagneten und ggf. einer Federeinrichtung verlagert werden.

Bevorzugt ist allerdings eine Bauweise, bei der der Elektromotor ortsfest zum Modulträger befestigt ist. Damit dennoch eine axiale Beweglichkeit der Antriebsspindel erreicht wird, ist in diesem Falle vorgesehen, dass die Ausgangswelle des Elektromotors und die Antriebsspindel zwar drehfest, aber zugleich auch axial verschieblich miteinander verbunden sind.

Dies kann insbesondere dadurch erzielt werden, dass die Antriebsspindel eine unrunde zentrische Ausnehmung zur Aufnahme der ebenfalls unrund gestalteten Ausgangswelle aufweist. Die Tiefe dieser Ausnehmung ist dabei ausreichend groß, um im gewünschten Maße eine axiale Relativbewegung zwischen Ausgangswelle und Antriebsspindel zu gewährleisten.

Die axiale Verschiebbarkeit des Elektromotors gegenüber der Antriebsspindel bietet auch den Vorteil einer Entkoppelung. Die Aufbringung einer Greifkraft am Greifobjekt kann mit einer schlagartigen Belastungder Antriebsspindel einhergehen. Durch die genannte axiale Entkoppelungwird diese schlagartige Belastungjedoch nicht auf den Elektromotor übertragen. Dies ist insbesondere bei getriebelosen Elektromotoren von Vorteil, die anderenfalls durch die schlagartige Belastung Schaden nehmen könnten.

Eine besonders kompakte Bauweise des Greifmoduls ist erzielbar, wenn der Elektromotor zwischen den Wirkelementen angeordnet ist und insbesondere eine Ausgangswelle des Elektromotors von den Greifflächen der Wirkelemente weg weist. Die Ausrichtung der Ausgangswelle schließt mit der Bewegungsrichtung der Wirkelemente vorzugsweise einen rechten Winkel ein.

Grundsätzlich ist es denkbar, das Aktorelement drehfest mit der Antriebsspindel zu verbinden, so dass der Elektromagnet und ggf. die ihm zugeordnete Federeinrichtung auf dieses drehbare Aktorelement wirken.

Bevorzugt ist es jedoch, wenn die Antriebsspindel drehbar am Aktorelement gelagert ist. Das Aktorelement ist dann als Ganzes nur axial verlagerbar, aber nicht drehbar. Zur Erzielung der drehbaren Lagerung kann ein Wälzlager zwischen dem Aktorelement und der Antriebsspindel vorgesehen sein. Insbesondere bei kleinen Baugrößen des Greifmoduls kann es jedoch von Vorteil sein, ein Gleitlager vorzusehen, da dieses kleiner gebaut werden kann.

Eine besonders bevorzugte Gestaltung sieht vor, dass die Antriebsspindel drehfest mit einem Druckteller verbunden ist. Das Aktorelement weist einen Aufnahmeraum zur Aufnahme dieses Drucktellers auf und kann so eine Kraft auf den Druckteller ausüben. Der Aufnahmeraum umschließt den Druckteller vorzugsweise von oben und unten, um sowohl eine Druckkraft als auch eine Zugkraft übertragen zu können.

Grundsätzlich ist eine Bauweise möglich, bei der die Spindelmutter selbst zumindest in Axialrichtung der Spindel fest mit dem Wirkelement verbunden ist. Das Wirkelement wird bei einer solchen Gestaltung in gleichem Maße und in gleicher Richtung wie die Spindelmutter bewegt.

Bevorzugt wird jedoch eine Gestaltung, bei der das Maß und/oder die Richtung der Bewegung der Spindelmutter von der des mindestens einen Wirkelements abweicht. Insbesondere wenn mehr als nur ein Wirkelement mittels der Spindelmutter bewegt werden soll, ist eine abweichende Richtung der Bewegung zu bevorzugen, insbesondere eine Ausrichtung der Antriebsspindel und eine Bewegungsrichtung der Spindelmutter, die mit der Bewegungsrichtung der Wirkelemente einen Winkel zwischen 70° und 110° einschließen.

Die Kraftumleitungzwischen derSpindelmutter und dem Wirkelement kann beispielsweise über ein Keilgetriebe erzielt werden.

Als insbesondere vorteilhaft wird es jedoch angesehen, wenn die Spindelmutter mit dem mindestens einen Wirkelement über einen Zwischenhebel verbunden ist. Dieser Zwischenhebel ist um eine zum Wirkelement ortsfeste Achse einerseits und um eine zur Spindelmutter ortsfeste Achse andererseits schwenkbeweglich. Eine Verlagerung der Spindelmutter wird über den Zwischenhebel an das Wirkelement weitergegeben.

Die Position der genannten Achsen und die sich hieraus ergebende Stellung des mindestens einen Zwischenhebels beeinflusst bei einer solchen Gestaltung, ob eine Verlagerung der Spindelmutter in eine vorgegebene Richtung eine Verlagerung der Wirkelemente voneinander weg oder aufeinander zu bewirkt, also ob die Wirkelemente im Sinne eines Außengreifers in Greifrichtung aufeinander zu oder im Sinne eines Innengreifers in Greifrichtung voneinander weg bewegt werden.

Um dasselbe Greifmodul sowohl als Innengreifer als auch als Außengreifer verwenden zu können, kann vorgesehen sein, dass an der Spindelmutter und/oder am Wirkelement mindestens zwei Schwenkgelenkbohrungen oder Schwenkgelenkachsen vorgesehen sind, so dass mehrere Optionen hinsichtlich der Anbringung des Zwischenhebels existieren, nämlich insbesondere eine erste Option, die die Verwendung als Innengreifer ermöglicht, und eine zweite Option, die die Verwendung als Au-ßengreifer ermöglicht.

Eine solche Gestaltung mit mindestens zwei Optionen zur Anbringung des Zwischenhebels an der Spindelmutter oder dem Wirkelement ist insbesondere bei kleinen Greifmodulen von Vorteil. Bei größeren Greifmodulen ist es möglich, einen ausreichend großen Verfahrweg der Spindelmutter auf der Antriebsspindel zu ermöglichen, so dass auch bei jeweils nur einer Möglichkeit der Anbringung des Zwischenhebels an der Spindelmutter und am Wirkelement durch Überfahren einer Stellung mit maximal beabstandeten Wirkelementen ein Umschalten zwischen Innengreifer und Außengreifer ermöglicht wird. Bei kleinen Greifmodulen kann hierfür der erforderliche Bauraum fehlen, so dass die Gestaltung mit zwei Schwenkgelenkbohrungen oder Schwenkgelenkachsen hiervon Vorteil ist.

Ein erfindungsgemäßesGreifmodul benötigt für den Betrieb eine Steuerschaltung, die insbesondere den Elektromagneten und den Elektromotor ansteuert. Diese Steuerschaltung kann Teil des Greifmoduls selbst sein und insbesondere in einem den Modulträger bildenden Modulgehäuse angeordnet sein, in welchem auch der Elektromotor und der Elektromagnet angeordnet sind. Die Steuerschaltung kann jedoch auch extern vorgesehen sein und mittels Steuerleitungen mit dem Elektromotor oder dem Elektromagneten verbunden sein.

Der Steuerschaltung ist vorzugsweise mindestens ein Sensor zur Erfassung der Lage oder einer Endlage von mindestens einem Wirkelement zugeordnet, um die aktuelle Position erfassen zu können und die Steuerung der Wirkelemente auf Basis dessen vornehmen zu können.

Ein erfindungsgemäßes Greifmodul kann in unterschiedlichen Anwendungen und mit unterschiedlichen Bewegungssystemen verwendet werden. Insbesondere bevorzugt ist die Verwendung als Robotergreifer oder die Verwendung als Greifmodul eines Handhabungsautomaten. Zur Ankopplung an das Bewegungssystem weist das Greifmodul vorzugsweise eine mechanische Kopplungseinrichtung auf, mittels derer der Modulträger an einem Roboterarm des Roboters oder einem Schlitten des Handhabungsautomaten ankoppelbar ist.

Darüber hinaus umfasst die Erfindung auch einen solchen Roboter mit einem Roboterarm, an dem ein Greifmodul angebracht ist, sowie einen solchen Handhabungsautomaten mit einem translativ verfahrbaren Schlitten, an dem ein Greifmodul angebracht ist, wobei das Greifmodul jeweils in oben beschriebener Art ausgestaltet ist.

Neben dem Greifmodul und hierauf aufbauend dem Roboter und dem Handhabungsautomaten betrifft die Erfindung auch ein Verfahren zum Greifen eines Greifobjektes mit den folgenden Verfahrensschritten.

Zunächst werden zwei Wirkelemente eines Greifmoduls in einer Ausgangsstellung positioniert, in der sie sich beabstandet zu den Greifflächen des Greifobjektes befinden. Die genannte Beabstandung kann im Falle eines Innengreifers zu den nach innen weisenden Greifflächen des Greifobjektes vorgesehen sein und im Falle eines Außengreifers zu den nach außen weisenden Greifflächen.

Ausgehend von dieser Ausgangsstellung werden die Wirkelemente mittels eines Elektromotors gegeneinander verlagert, bis die Wirkelemente an Flächen des Greifobjektes anliegen. Die hierbei auf die Wirkelemente wirkende Kraft beträgt vorzugsweise weniger als 50 Newton.

Sobald die Wirkelemente an gegenüberliegenden Seiten des Greifobjektes anliegen, werden die Wirkelemente durch Aktivieren oder Deaktivieren eines Elektromagneten gegeneinander kraftbeaufschlagt, um von innen oder außen eine Greifkraft auf das Greifobjekt auszuüben. Vorzugsweise wird der Elektromagnet hierfür deaktiviert, also die Bestromung unterbrochen, so dass die Greifkraft durch eine sich in Folge der Deaktivierung verlängernde Federeinrichtung erzielt wird. Eine solche Bauweise bewirkt, dass die Greifkraft nicht im Falle eines Stromausfalls entfällt.

Das genannte Verfahren wird vorzugsweise mit einem Greifmoduls oben beschriebener Art durchgeführt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Greifmodul in geschnittener Ansicht.
Fig. 2 zeigt eine Antriebsspindel des Greifmoduls und dessen kinematische Kopplung mit den Wirkelementen des Greifmoduls.
Fig. 3 zeigt ein Spindelbauteil und dessen drehfeste Kopplung mit einer Ausgangswelle eines Elektromotors des Greifmoduls.
Fig. 4A bis 4C zeigen die Funktionsweise des Greifmoduls bei dessen Verwendung als Außengreifer.
Fig. 5A bis 5C zeigen die Funktionsweise des Greifmoduls bei dessen Verwendung als Innengreifer.
Fig. 6 zeigt einen erfindungsgemäßen Industrieroboter mit einem erfindungsgemäßen Greifmodul.
Fig. 7 zeigt einen erfindungsgemäßen Handhabungsautomat mit einem erfindungsgemäßen Greifmodul.

### DETAILLIERTE BESCHREIBUNG DER AUSFÜHRUNGSBEISPIELE

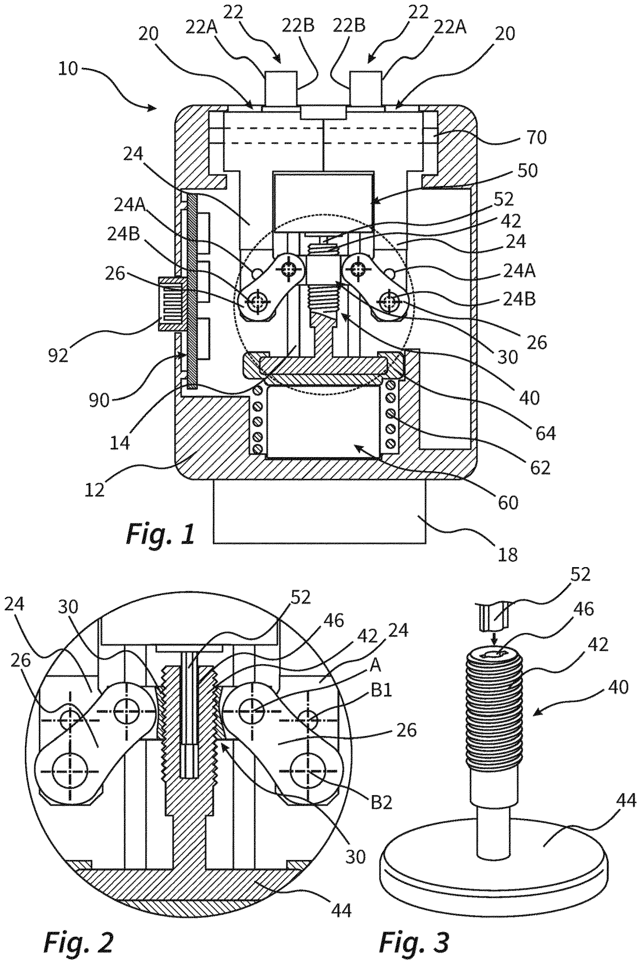

Fig. 1 zeigt ein erfindungsgemäßes Greifmodul 10 in einer geschnittenen Ansicht. Fig. 2 stellt einen Teilausschnitt der Fig. 1 vergrößert und partiell anders geschnitten dar.

Das Greifmodul 10 verfügt über ein als Modulträger 12 agierendes Modulgehäuse, welches mit einer nicht näher beschriebenen Kopplungseinrichtung 18 versehen ist, um beispielsweise an einen Roboterarm 104 oder einen Handhabungsautomaten 200 angekoppelt zu werden.

Das Greifmodul 10 verfügt über zwei Wirkelemente 20, die durch eine Wellenführung 70 geführt verlagerbar sind. Die beiden Wirkelemente 20 weisen nach aus dem Modulgehäuse herausragende Greifbacken 22 auf, die über innen liegende und aufeinander zu weisende Greifflächen 22B sowie außen liegende und voneinander weg weisende Greifflächen 22A verfügen. Mittels dieser Greifbacken 22 oder hieran befestigter Greiffinger kann das Greifmodul 10 bestimmungsgemäß Greifobjekte ergreifen. Hierfür werden die Greifbacken 22 von außen oder innen an das betreffende Greifobjekt herangefahren und eine für die Handhabung ausreichende Greifkraft zwischen ihnen aufgebracht.

Zur Verlagerung und Kraftbeaufschlagung der Wirkelemente 20 verfügt das Greifmodul 10 über ein Antriebssystem, dessen Komponenten im Weiteren beschrieben sind.

Das Antriebssystem verfügt als Hauptkomponente über eine Antriebsspindel42, die Teil eines Spindelbauteils 40 ist. Auf die Antriebsspindel 42 ist eine Spindelmutter 30 aufgeschraubt, die über zwei nach außen weisende Flügel verfügt. Diese Flügel der Spindelmutter 30 sind mit Fortsätzen 24 der Wirkelemente 20 über Zwischenhebel 26 verbunden. Diese Zwischenhebel 26 sind, wie insbesondere in der vergrößerten Darstellung der Fig. 2 ersichtlich, jeweils um eine Achse A schwenkbeweglich an der Spindelmutter 30 und um eine Achse B2 am Fortsatz 24 schwenkbar angelenkt. Sie sind dadurch in der Lage, eine bezogen auf die Figuren vertikal stattfindende Bewegung der Spindelmutter 30 in eine horizontale Bewegung der Wirkelemente 20 zu überführen.

Zur Bewegung der Antriebsspindel 42 und des gesamten Spindelbauteils 40 sind ein Elektromotor 50 und ein Elektromagnet 60 vorgesehen.

Der Elektromotor 50 ist ein getriebeloser und bürstenloser Gleichstrommotor, dessen Ausgangswelle 52 mit seiner Rotorwelle übereinstimmt, also koaxial zum Rotor angeordnet ist und mit der Drehzahl des Motors dreht. Die Ausgangswelle 52 ist in der in Fig. 2 und 3 gut ersichtlichen Weise von oben in eine Ausnehmung 46 der Antriebsspindel 42 eingeschoben, wobei aufgrund der unrunden Form sowohl der Ausgangswelle 52 als auch der Ausnehmung 46 Drehfestigkeit zwischen der Ausgangswelle 52 und der Antriebsspindel 42 erzielt wird. Allerdings verbleibt eine axiale Beweglichkeit, da eine axiale Kopplung zwischen der Ausgangswelle 52 und der Antriebsspindel 42 nicht besteht.

Auch der Elektromagnet 60 wirkt ebenfalls auf das Spindelbauteil 40. Er tut dies über ein Aktorelement 64, welches durch eine Federeinrichtung 62 in Art einer Druckschraubenfeder in Richtung einer oberen Endlage gedrückt wird. Durch den Elektromagneten 60 ist es möglich, dieses Aktorelement 64 gegen die Kraft der Federeinrichtung 62 anzuziehen, so dass das Aktorelement 64 in seiner unteren Endlage, in der in Fig. 1 verdeutlichten Weise am Elektromagneten 60 anliegt. Wird der Elektromagnet 60 deaktiviert, so dehnt sich die Federeinrichtung 62 aus und schiebt das Aktorelement 64 bezogen auf die Figuren nach oben. Das Aktorelement 64 verfügt über einen Aufnahmeraum, in dem ein Druckteller 44 des Spindelbauteils 40 drehbar gelagert ist.

Aufgrund dieser Bauweise ist es möglich, über Aktivierung und Deaktivierung des Elektromagneten 60 die Antriebsspindel 42 und mit ihr die Spindelmutter 30 im begrenzten Umfange anheben und absenken zu können.

Zur Steuerung des Elektromotors 50 und des Elektromagneten 60 weist das Greifmodul 10 eineSteuerplatine 90 auf, die in nicht näher dargestellter Weise mit dem Elektromotor 50 und dem Elektromagneten 60 und gegebenenfalls mit ergänzenden Sensoren wie Endlagensensoren verbunden ist. Zum Anschluss einer externen Steuerleitung verfügt die Steuerplatine über eine Anschlussbuchse 92, die in einer Durchbrechung des Modulgehäuses platziert ist.

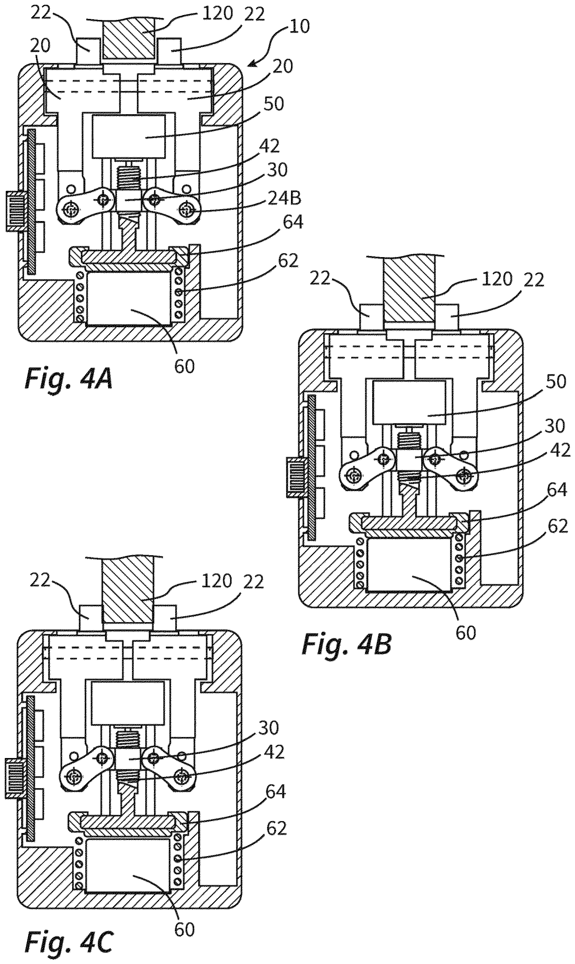

Die Fig. 4A bis 4C verdeutlichen die Verwendung des Greifmoduls 10 als Außengreifer.

In Fig. 4A ist ein Ausgangszustand dargestellt, in welchem der Elektromagnet 60 bestromt ist und somit gegen die Kraft der Federeinrichtung 62 das Aktorelement 64 sowie die Antriebsspindel 42 in eine untere Endlage zieht. Mittels des Elektromotors sind die Wirkelemente 20 so weit voneinander beabstandet, dass die Greifbacken 22 einen Abstand zu einem Greifobjekt 120 aufweisen.

Ausgehend von dieser Ausgangsstellung wird zunächst mittels der Steuerplatine 90 der Elektromotor 50 mit Strom versorgt und in eine Richtung gedreht, die zu einer Bewegung der Spindelmutter 30 nach oben führt. Durch diese Bewegung werden unter Vermittlung der Zwischenhebel 26 die Wirkelemente 20 aufeinander zubewegt, bis sie in der in Fig. 4B verdeutlichten Weise außenseitig am Greifobjekt 120 anliegen. Eine relevante Greifkraft wird jedoch noch nicht aufgebracht, da der Elektromotor 50 keine ausreichende Leistung aufweist.

Ausgehend vom Zustand der Fig. 4B wird dann die Bestromung des Elektromagneten 60 aufgehoben. Auswirkung dessen ist, dass die Federeinrichtung 62 das Aktorelement 64 nach oben drückt und es hierbei zusammen mit der Spindelmutter 30 verlagert. Diese Verlagerung hat zur Folge, dass die Kraft der als Druckfeder ausgestalteten Federeinrichtung 62 auf die Greifbacken 22 übertragen wird und eine für die Handhabung des Greifobjekts 120 ausreichende Greifkraft verursacht.

Kommt es im Zustand der Fig. 4C zu einem Stromausfall, so ist dies für den Greifzustand unerheblich, da dieser durch die Federeinrichtung 62 aufrechterhalten wird.

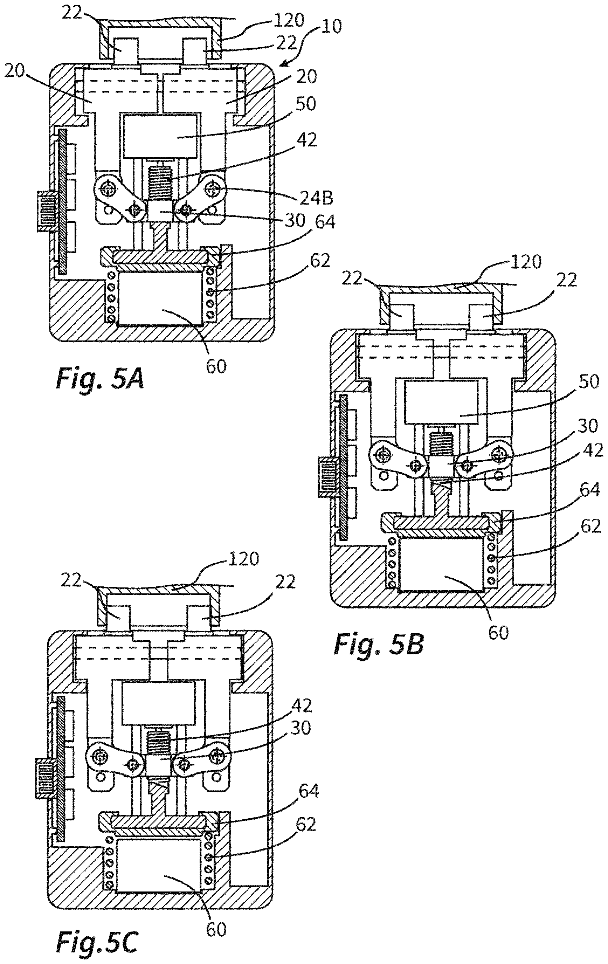

Die Fig. 5A bis 5C zeigen das gleiche Greifmodul, jedoch in einer anderen Konfiguration, nämlich in der Konfiguration eines Innengreifers.

Bei dieser Konfiguration sind die Zwischenhebel 26 nicht um die Achse B2 schwenkbar, sondern um die in Fig. 2 dargestellte Achse B1. Weiterhin befindet sich im Ausgangszustand der Fig. 5A die Spindelmutter 30 gegenüber der Antriebsspindel 42 in einer deutlich abgesenkten Stellung.

Die Greifbacken 22 werden also bei diesem Innengreifer zum Zwecke des Greifens voneinander wegbewegt. Dies erfolgt in ähnlicher Art und Weise, wie zu den Fig. 4A bis 4C bereits erläutert.

Ausgehend vom Zustand der Fig. 5A wird zunächst mittels des Elektromotors 50 die Antriebsspindel 42 gedreht, so dass die Spindelmutter 30 angehoben wird und aufgrund der nun herrschenden geometrischen Verhältnisse über die Zwischenhebel 26 die Wirkelemente 20 voneinander weggedrückt werden, bis sie die Endlage der Fig. 5B erreichen, in der sie innenseitig gegenüberliegend am Greifobjekt 120 anliegen.

Ist dieser Zustand erreicht, so wird wiederum die Bestromung des Elektromagneten 60 aufgehoben, wodurch die Federeinrichtung 62 das Aktorelement 64 nach oben drückt. Die entsprechende Kraft setzt sich über die Zwischenhebel 26 auf die Wirkelemente 20 fort und bewirkt nun eine Greifkraft, mit der die Greifbacken 22 voneinander weggedrückt werden und mit der sie das Greifobjekt 120 halten.

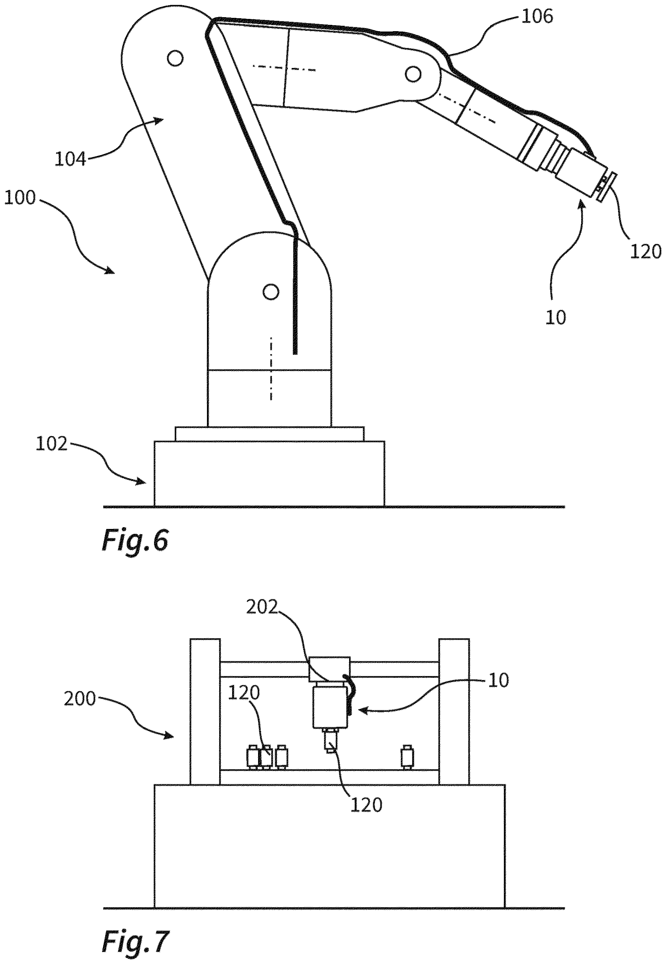

Die Fig. 6 und 7 zeigen typische Anwendungsfälle eines Greifmoduls entsprechend dem der Fig. 1 bis 5C.

Fig. 6 zeigt einen Roboter 100, der über einen mehrgliedrigen und gegenüber einer Basis 102 beweglichen Roboterarm 104 verfügt. Am distalen Ende dieses Roboterarms 104 ist eine Kopplungseinrichtung vorgesehen, an der das Greifmodul 10 mittels seiner Kopplungseinrichtung 18 befestigt ist. Über eine Steuerleitung 106 ist das Greifmodul 10 mit dem Roboter 100 verbunden. In dieser Konfiguration kann der Roboter genutzt werden, um Greifobjekte 120 zu ergreifen, zu transportieren und wieder abzulegen.

Fig. 7 zeigt einen Handhabungsautomaten 200. Dieser verfügt über einen Schlitten 202, der in allen drei Raumachsen verfahrbar ist. An der Unterseite weist der Schlitten 202 eine Kopplungsschnittstelle auf, an die ein Greifmodul 10 entsprechend dem der Fig. 1 bis 5C mittels seiner Kopplungseinrichtung 18 angekoppelt ist. Das Greifmodul 10 kann somit bei gleichbleibender Ausrichtung, insbesondere bei nach unten gerichteter Ausrichtung, frei im Raum bewegt werden, Greifobjekte 120 ergreifen, transportieren und an anderer Stelle wieder ablegen.

## Patentansprüche

1. Greifmodul (10) zum Zwecke des Greifens und Bewegens von Greifobjekten mit den folgenden Merkmalen:
a. das Greifmodul (10) verfügt über einen Modulträger (12), und
b. das Greifmodul (10) verfügt über mindestens zwei Wirkelemente (20), die relativ zueinander verlagerbar sind und Greifflächen (22A, 22B) zum Ergreifen des Greifobjektes aufweisen, und
c. mindestens eines der Wirkelemente (20) ist mittels eines Antriebssystems gegenüber dem Modulträger (12) verlagerbar,
**gekennzeichnet durch** das folgende Merkmal:
d. das Antriebssystem verfügt über einen Elektromotor (50) und über ein mittels eines Elektromagneten (60) verlagerbares Aktorelement (64), wobei der Elektromotor (50) und das Aktorelement (64) mit dem Wirkelement (20) kinematisch gekoppelt sind.

2. Greifmodul (10) nach Anspruch 1 mit dem folgenden weiteren Merkmal:
a. mindestens zwei gegeneinander bewegliche Wirkelemente (20) sind mittels des Antriebssystems jeweils gegenüber dem Modulträger (12) aufeinander zu sowie voneinander weg verlagerbar.

3. Greifmodul (10) nach Anspruch 1 oder 2 mit den folgenden weiteren Merkmalen:
a. das Antriebssystem verfügt über eine Antriebsspindel (42), die gegenüber dem Modulträger (12) rotativ beweglich ist und axial beweglich ist, und
b. auf der Antriebsspindel (42) ist eine translativ verlagerbare Spindelmutter (30) geführt, die mit dem mindestens einen angetriebenen Wirkelement (20) kinematisch gekoppelt ist.

4. Greifmodul (10) nach Anspruch 3 mit dem folgenden weiteren Merkmal:
a. die Antriebsspindel (42) ist rotativ mit dem Elektromotor (50) gekoppelt und axial mittels des Aktorelements (64) verlagerbar.

5. Greifmodul (10) nach Anspruch 3 oder4 mit den folgenden weiteren Merkmalen:
a. der Elektromotor (50) ist ortsfest zum Modulträger (12) befestigt, und
b. eine Ausgangswelle (52) des Elektromotors (50) und die Antriebsspindel (42) sind drehfest und axial verschieblich miteinander verbunden,
vorzugsweise mit dem folgenden zusätzlichen Merkmal:
c. die Antriebsspindel (42) weist eine unrunde zentrische Ausnehmung (46) zur Aufnahme der unrund gestalteten Ausgangswelle (52) auf.

6. Greifmodul (10) nach einem der vorstehenden Ansprüche mit dem folgenden weiteren Merkmal:
a. die Antriebsspindel (42) ist drehbar am Aktorelement (64) gelagert,
vorzugsweise mit dem folgenden zusätzlichen Merkmal:
b. die Antriebsspindel (42) ist drehfest mit einem Druckteller (44) verbunden und das Aktorelement (64) weist einen Aufnahmeraum zur Aufnahme dieses Drucktellers (44) auf.

7. Greifmodul (10) nach einem der Ansprüche 2 bis 6 mit den folgenden weiteren Merkmalen:
a. die Spindelmutter (30) ist mit dem mindestens einen Wirkelement (20) über einen Zwischenhebel (26) verbunden, und
b. der Zwischenhebel (26) ist um eine zum Wirkelement (20) ortsfeste Achse und um eine zur Spindelmutter (30) ortsfeste Achse schwenkbeweglich.

8. Greifmodul (10) nach Anspruch 7 mit dem folgenden weiteren Merkmal:
a. an der Spindelmutter (30) und/oder am Wirkelement (20) sind mindestens zwei Schwenkgelenkbohrungen (24A, 24B) oder Schwenkgelenkachsen vorgesehen, so dass der Zwischenhebel (26) in zwei unterschiedlichen Stellungen an der Spindelmutter (30) oder dem Wirkelement (20) schwenkbar anbringbar ist.

9. Greifmodul (10) nach einem der vorstehenden Ansprüche mit dem folgenden weiteren Merkmal:
a. dem Elektromagneten (60) ist eine Federeinrichtung (62) derart zugeordnet, dass die Federeinrichtung (62) durch Aktivierung des Elektromagneten (60) gespannt werden kann,
vorzugsweise mit mindesten einem der folgenden Merkmale:
b. die Federeinrichtung (62) stütztsich mit einem Federende am Aktorelement (64) ab, und/oder
c. die Federeinrichtung (62) wirkt derart auf das Aktorelement, dass das Wirkelement (20) hierdurch in eine Greifrichtung kraftbeaufschlagt wird, und/oder
d. die Federeinrichtung (62) ist als Druckfeder ausgestaltet.

10. Greifmodul (10) nach einem der Ansprüche 3 bis 9 mit dem folgenden weiteren Merkmal:
a. eine Ausgangswelle (52) des Elektromotors wird unmittelbar durch eine Rotorwelle (52) des Elektromotors gebildet.

11. Greifmodul (10) nach einem der vorstehenden Ansprüche mit den folgenden weiteren Merkmalen:
a. der Elektromotor (50) und das Aktorelement (64) sind einander gegenüberliegend beidseitig der Antriebsspindel (42) vorgesehen, und/oder
b. der Elektromotor (50) ist zwischen zwei Wirkelementen (20) angeordnet, und/oder
c. das Wirkelement (20) oder vorzugsweise eine Mehrzahl von Wirkelementen (20) ist mittels einer Linearführung (70) geführt gegenüber dem Modulträger (12) beweglich, insbesondere vorzugsweise mittels einer Wellenführung (70), und/oder
d. das Greifmodul (10) weist mindestens einen Sensorzur Erfassung der Lage oder einer Endlage von mindestens einem Wirkelement (20), und/oder
e. das Greifmodul (10) ist als Robotergreifer ausgebildet und verfügt am Modulträger (12) über eine Kopplungseinrichtung (18) zur Anbringung an einem Roboterarm (104) eines Roboters (100), und/oder
f. der Elektromotor (50) weist eine Maximalleistung auf, die zu einer maximalen Kraft zwischen den Wirkelementen (20) von weniger als 50 Newton führt, insbesondere von weniger als 30 Newton, und/oder
g. eine Ausgangswelle (52) des Elektromotors (50) erstreckt sich orthogonal zu einer Bewegungsrichtung des mindestens einen angetriebenen Wirkelements (20), und/oder
h. die Wirkelemente (20) verfügen über jeweils mindestens eine Greifbacke (22), wobei die Greifbacken vorzugsweise über aufeinander zu weisende und voneinanderweg weisende Greifflächen (22A, 22B) verfügen, und/oder
i. das Greifmodul (10) weist ein den Modulträger (12) bildendes Modulgehäuse auf, in welchem der Elektromotor (50) und der Elektromagnet (60) angeordnet sind, wobei das Modulgehäuse vorzugsweise eine Steuerplatine (90) zur Steuerung des Elektromotors (50) und/oder des Elektromagneten (60) beinhaltet.

12. Roboter (100) mit den folgenden Merkmalen:
a. der Roboter (100) verfügt über einen Roboterarm (104) sowie über ein am Roboterarm angebrachtes Greifmodul (10),
**gekennzeichnet durch** das folgende Merkmal:
b. das Greifmodul (10) ist als Greifmodul (10) gemäß einem der Ansprüche 1 bis 11 ausgebildet.

13. Handhabungsautomat (200) mit dem folgenden Merkmal:
a. der Handhabungsautomat (200) verfügt über einen translativ verfahrbaren Schlitten (202), an dem ein Greifmodul (10) angebracht ist,
**gekennzeichnet durch** das folgende Merkmal:
b. das Greifmodul (10) ist als Greifmodul (10) gemäß einem der Ansprüche 1 bis 11 ausgebildet.

14. Verfahren zum Greifen eines Greifobjektes mit den folgenden Verfahrensschritten:
a. zwei Wirkelemente (20) eines Greifmoduls (10) werden in einer Ausgansstellung positioniert, in der sie beabstandet zu Greifflächen des Greifobjektes positioniert sind, und
b. die Wirkelemente (20) werden mittels eines Elektromotors (50) gegeneinander verlagert, bis die Wirkelemente (20) an Flächen des Greifobjektes (120) anliegen, und
c. durch Aktivieren oder Deaktivieren eines Elektromagneten (60) werden die Wirkelemente (20) anschließend gegeneinander kraftbeaufschlagt, um eine Greifkraft auf das Greifobjekt (120) auszuüben.

15. Verfahren nach Anspruch 14 mit dem folgenden weiteren Merkmal:
a. das Verfahren wird mittels eines Greifmoduls (10) gemäß einem der Ansprüche 1 bis 11 durchgeführt.

## Claims

1. Gripping module (10) for the purpose of gripping and moving gripping objects, comprising the following features:
a. the gripping module (10) has a module support (12), and
b. the gripping module (10) has at least two active elements (20) which are displaceable relative to one another and have gripping surfaces (22A, 22B) for gripping the gripped object, and
c. at least one of the active elements (20) is displaceable relative to the module carrier (12) by means of a drive system,
**characterized by** the following feature:
d. the drive system has an electric motor (50) and an actuator element (64) displaceable by means of an electromagnet (60), the electric motor (50) and the actuator element (64) being kinematically coupled to the active element (20).

2. Gripper module (10) according to claim 1 comprising the following further feature:
a. at least two mutually movable active elements (20) can be displaced toward and away from each other relative to the module carrier (12) by means of the drive system.

3. Gripper module (10) according to claim 1 or 2 comprising the following further features:
a. the drive system has a drive spindle (42) which is rotatably movable relative to the module carrier (12) and is axially movable, and
b. a translationally displaceable spindle nut (30) is guided on the drive spindle (42) and is kinematically coupled to the at least one driven active element (20).

4. Gripper module (10) according to claim 3 comprising the following further feature:
a. the drive spindle (42) is rotationally coupled to the electric motor (50) and axially displaceable by means of the actuator element (64).

5. Gripper module (10) according to claim 3 or 4 with the following further features:
a. the electric motor (50) is fixedly attached to the module support (12), and
b. an output shaft (52) of the electric motor (50) and the drive spindle (42) are connected to each other in a rotationally fixed and axially displaceable manner,
preferably with the following additional feature:
c. the drive spindle (42) has a non-circular centric recess (46) for receiving the non-circular output shaft (52).

6. Gripper module (10) according to any one of the preceding claims, comprising the following further feature:
a. the drive spindle (42) is rotatably mounted on the actuator element (64),
preferably with the following additional feature:
b. the drive spindle (42) is connected in a rotationally fixed manner to a pressure plate (44) and the actuator element (64) has a receiving space for receiving this pressure plate (44).

7. Gripper module (10) according to any one of claims 2 to 6, comprising the following further features:
a. the spindle nut (30) is connected to the at least one active element (20) via an intermediate lever (26), and
b. the intermediate lever (26) is pivotally movable about an axis stationary relative to the active element (20) and about an axis stationary relative to the spindle nut (30).

8. Gripper module (10) according to claim 7 comprising the following further feature:
a. at least two swivel joint bores (24A, 24B) or swivel joint axes are provided on the spindle nut (30) and/or on the active element (20), so that the intermediate lever (26) can be pivotably attached to the spindle nut (30) or the active element (20) in two different position.

9. Gripper module (10) according to any one of the preceding claims, comprising the following further feature:
a. a spring device (62) is associated with the electromagnet (60) in such a way that the spring device (62) can be tensioned by activation of the electromagnet (60),
preferably with at least one of the following features:
b. the spring device (62) is supported by a spring end on the actuator element (64), and/or
c. the spring device (62) acts on the actuator element in such a way that the active element (20) is thereby force-loaded in a gripping direction, and/or
d. the spring device (62) is designed as a compression spring.

10. Gripper module (10) according to any one of claims 3 to 9, comprising the following further feature:
a. an output shaft (52) of the electric motor is formed directly by a rotor shaft (52) of the electric motor.

11. Gripper module (10) according to any of the preceding claims comprising the following further features:
a. the electric motor (50) and the actuator element (64) are provided opposite each other on both sides of the drive spindle (42), and/or
b. the electric motor (50) is arranged between two active elements (20), and/or
c. the active element (20) or preferably a plurality of active elements (20) is guided by means of a linear guide (70) so as to be movable relative to the module carrier (12), in particular preferably by means of a shaft guide (70), and/or
d. the gripping module (10) has at least one sensor for detecting the position or an end position of at least one active element (20), and/or
e. the gripping module (10) is designed as a robot gripper and has a coupling device (18) on the module carrier (12) for attachment to a robot arm (104) of a robot (100), and/or
f. the electric motor (50) has a maximum power which results in a maximum force between the active elements (20) of less than 50 Newton, in particular less than 30 Newton, and/or
g. an output shaft (52) of the electric motor (50) extends orthogonally to a direction of movement of the at least one driven active element (20), and/or
h. the active elements (20) each have at least one gripping jaw (22), the gripping jaws preferably having gripping surfaces (22A, 22B) facing towards and away from one another, and/or
i. the gripping module (10) has a module housing forming the module carrier (12), in which the electric motor (50) and the electromagnet (60) are arranged, the module housing preferably containing a control board (90) for controlling the electric motor (50) and/or the electromagnet (60).

12. Robot (100) comprising the following features:
a. the robot (100) has a robot arm (104) and a gripping module (10) attached to the robot arm,
**characterized by** the following feature:
b. the gripping module (10) is designed as a gripping module (10) according to one of claims 1 to 11.

13. Handling machine (200) comprising the following feature:
a. the automatic handling machine (200) has a translationally movable carriage (202), to which a gripping module (10) is attached,
**characterized by** the following feature:
b. the gripping module (10) is designed as a gripping module (10) according to one of claims 1 to 11.

14. Method for gripping a gripping object comprising the following method steps:
a. two active elements (20) of a gripping module (10) are positioned in an initial position in which they are positioned at a distance from gripping surfaces of the gripping object, and
b. the active elements (20) are displaced against each other by means of an electric motor (50) until the active elements (20) are in contact with surfaces of the gripping object (120), and
c. by activating or deactivating an electromagnet (60), the active elements (20) are then force-loaded against one another in order to exert a gripping force on the gripping object (120).

15. The method of claim 14, comprising the following further feature:
a. the method is carried out by means of a gripping module (10) according to any one of claims 1 to 11.

## Revendications

1. Module de préhension (10) pour saisir et déplacer des objets de préhension avec les caractéristiques suivantes :
a. le module de préhension (10) dispose d'un support de module (12), et
b. le module de préhension (10) dispose d'au moins deux éléments d'action (20) qui peuvent être déplacés l'un par rapport à l'autre et qui présentent des surfaces de préhension (22A, 22B) pour saisir l'objet de préhension, et
c. au moins un des éléments actifs (20) peut être déplacé par rapport au support de module (12) au moyen d'un système d'entraînement,
**caractérisé par** la caractéristique suivante :
d. le système d'entraînement dispose d'un moteur électrique (50) et d'un élément d'actionnement (64) déplaçable au moyen d'un électroaimant (60), le moteur électrique (50) et l'élément d'actionnement (64) étant couplés cinématiquement à l'élément d'actionnement (20).

2. Module de préhension (10) selon la revendication 1, ayant la caractéristique supplémentaire suivante :
a. au moins deux éléments d'actionnement (20) mobiles l'un par rapport à l'autre peuvent être déplacés l'un vers l'autre et à l'écart l'un de l'autre au moyen du système d'entraînement par rapport au support de module (12).

3. Module de préhension (10) selon la revendication 1 ou 2, avec les autres caractéristiques suivantes :
a. le système d'entraînement dispose d'une broche d'entraînement (42) qui est mobile en rotation par rapport au support de module (12) et qui est mobile axialement, et
b. un écrou de broche (30) déplaçable en translation est guidé sur la broche d'entraînement (42), qui est couplé cinématiquement à l'au moins un élément d'actionnement entraîné (20).

4. Module de préhension (10) selon la revendication 3, ayant la caractéristique supplémentaire suivante :
a. la broche d'entraînement (42) est couplée de manière rotative au moteur électrique (50) et peut être déplacée axialement au moyen de l'élément d'actionnement (64).

5. Module de préhension (10) selon la revendication 3 ou 4, avec les autres caractéristiques suivantes :
a. le moteur électrique (50) est fixé de manière fixe au support de module (12), et
b. un arbre de sortie (52) du moteur électrique (50) et la broche d'entraînement (42) sont reliés l'un à l'autre de manière fixe en rotation et déplaçable axialement,
de préférence avec la caractéristique supplémentaire suivante :
c. la broche d'entraînement (42) présente un évidement central non rond (46) pour recevoir l'arbre de sortie non rond (52).

6. Module de préhension (10) selon l'une des revendications précédentes, ayant la caractéristique supplémentaire suivante :
a. la broche d'entraînement (42) est montée rotative sur l'élément d'actionneur (64),
de préférence avec la caractéristique supplémentaire suivante :
b. la broche d'entraînement (42) est reliée de manière solidaire en rotation à un plateau de pression (44) et l'élément actionneur (64) présente un espace de réception pour recevoir ce plateau de pression (44).

7. Module de préhension (10) selon l'une quelconque des revendications 2 à 6, présentant les caractéristiques supplémentaires suivantes :
a. l'écrou de broche (30) est relié à l'au moins un élément actif (20) par l'intermédiaire d'un levier intermédiaire (26), et
b. le levier intermédiaire (26) peut pivoter autour d'un axe fixe par rapport à l'élément actif (20) et autour d'un axe fixe par rapport à l'écrou de broche (30).

8. Module de préhension (10) selon la revendication 7, ayant la caractéristique supplémentaire suivante :
a. au moins deux trous d'articulation pivotants (24A, 24B) ou axes d'articulation pivotants sont prévus sur l'écrou de broche (30) et/ou sur l'élément d'actionnement (20), de sorte que le levier intermédiaire (26) peut être monté de manière pivotante dans deux positions différentes sur l'écrou de broche (30) ou sur l'élément d'actionnement (20).

9. Module de préhension (10) selon l'une des revendications précédentes, ayant la caractéristique supplémentaire suivante :
a. un dispositif à ressort (62) est associé à l'électroaimant (60) de sorte que le dispositif à ressort (62) peut être tendu en activant l'électroaimant (60),
de préférence avec au moins l'une des caractéristiques suivantes :
b. le dispositif à ressort (62) s'appuie avec une extrémité de ressort sur l'élément d'actionneur (64), et/ou
c. le dispositif à ressort (62) agit sur l'élément d'actionnement de sorte que l'élément d'actionnement (20) est ainsi sollicité en force dans une direction de préhension, et/ou
d. le dispositif à ressort (62) est conçu comme un ressort de compression.

10. Module de préhension (10) selon l'une quelconque des revendications 3 à 9, ayant la caractéristique supplémentaire suivante :
a. un arbre de sortie (52) du moteur électrique est formé directement par un arbre de rotor (52) du moteur électrique.

11. Module de préhension (10) selon l'une des revendications précédentes, présentant les caractéristiques supplémentaires suivantes :
a. le moteur électrique (50) et l'élément d'actionnement (64) sont prévus l'un en face de l'autre de part et d'autre de la broche d'entraînement (42), et/ou
b. le moteur électrique (50) est disposé entre deux éléments actifs (20), et/ou
c. l'élément d'action (20), ou de préférence une pluralité d'éléments d'action (20), est mobile par rapport au support de module (12) au moyen d'un guidage linéaire (70), en particulier au moyen d'un guidage par arbre (70), et/ou
d. le module de préhension (10) comporte au moins un capteur pour détecter la position ou une position finale d'au moins un élément actif (20), et/ou
e. le module de préhension (10) est conçu comme une pince de robot et dispose d'un dispositif de couplage (18) sur le support de module (12) pour la fixation sur un bras de robot (104) d'un robot (100), et/ou
f. le moteur électrique (50) a une puissance maximale conduisant à une force maximale entre les éléments actifs (20) inférieure à 50 newtons, notamment inférieure à 30 newtons, et/ou
g. un arbre de sortie (52) du moteur électrique (50) s'étend perpendiculairement à une direction de mouvement de l'au moins un élément actif entraîné (20), et/ou
h. les éléments actifs (20) disposent chacun d'au moins une mâchoire de préhension (22), les mâchoires de préhension disposant de préférence de surfaces de préhension (22A, 22B) orientées l'une vers l'autre et éloignées l'une de l'autre, et/ou
i. le module de préhension (10) présente un boîtier de module formant le support de module (12), dans lequel le moteur électrique (50) et l'électroaimant (60) sont disposés, le boîtier de module contenant de préférence une carte de commande (90) pour la commande du moteur électrique (50) et/ou de l'électroaimant (60).

12. Robots (100) avec les caractéristiques suivantes :
a. le robot (100) dispose d'un bras robotisé (104) ainsi que d'un module de préhension (10) fixé au bras robotisé,
**caractérisé par** la caractéristique suivante :
b. le module de préhension (10) est conçu comme un module de préhension (10) selon l'une quelconque des revendications 1 à 11.

13. Automate de manutention (200) avec la caractéristique suivante :
a. l'automate de manutention (200) dispose d'un chariot (202) déplaçable en translation sur lequel est fixé un module de préhension (10),
**caractérisé par** la caractéristique suivante :
b. le module de préhension (10) est conçu comme un module de préhension (10) selon l'une quelconque des revendications 1 à 11.

14. Procédé de préhension d'un objet de préhension avec les étapes de procédé suivantes :
a. deux éléments actifs (20) d'un module de préhension (10) sont positionnés dans une position de départ dans laquelle ils sont positionnés à distance des surfaces de préhension de l'objet de préhension, et
b. les éléments actifs (20) sont déplacés les uns par rapport aux autres au moyen d'un moteur électrique (50) jusqu'à ce que les éléments actifs (20) s'appliquent contre les surfaces de l'objet de préhension (120), et
c. en activant ou désactivant un électroaimant (60), les éléments actifs (20) sont ensuite soumis à une force l'un contre l'autre pour exercer une force de préhension sur l'objet de préhension (120).

15. Procédé selon la revendication 14, ayant la caractéristique supplémentaire suivante :
a. le procédé est réalisé au moyen d'un module de préhension (10) selon l'une quelconque des revendications 1 à 11.
